# EUROPEAN PATENT SPECIFICATION

(11) **EP 4 309 932 B1**
(45) Date of publication and mention of the grant of the patent: **12.11.2025**
(21) Application number: 22185540.6
(22) Date of filing: 18.07.2022
(51) Int. Cl.: B60J 7/04

(54) **KITS FOR A TRUCK BED COVER ASSEMBLY**
BAUSÄTZE FÜR EINE LKW-LADEFLÄCHENABDECKUNGSANORDNUNG
KITS POUR UN ENSEMBLE COUVERCLE DE PLATEAU

(43) Date of publication of application: 24.01.2024
(73) Proprietor: Gi.Anso 4x4 Club S.A., 19200 Elefsina-Attikis (GR)
(72) Inventor: Michailidis, Athinodoros, 19200 ELEFSINA-ATTIKIS (GR)
(74) Representative: Araujo, Daniel

(56) References cited:
- EP-B1- 3 517 331
- US-A- 4 784 427
- US-A1- 2016 236 550
- US-A1- 2020 130 483

## Description

### Field of the invention

The invention relates to kits for converting a manually operated roll-up cover assembly, installed in the truck bed of a pick-up type vehicle, to a motorized roll-up cover or a spring assisted cover assembly, respectively.

### Background

Patent application document US 2016/236550 A1 describes a retractable cover system which includes a frame providing an opening and a drive system, wherein a flexible cover is configured to slide relative to the frame between first and second positions within the opening in response to actuation of the drive system.

The design and use of retractable roll-up truck bed covers with open bed pickup trucks to provide security and protection for cargo items carried within the truck bed is well known. Conventional retractable roll-up truck bed covers commonly include a plurality of individual slats hingedly connected to form a slat array. The hinged connection of individual slats enables the slat array to form a continuous cover that, once mounted in a pair of side rails, can be either completely or partially extended or retracted and stored in a rolled-up configuration inside a housing.

There are several types of known roll-up covers. There are roll-up covers manually operated in both directions, with no spring or electric motor, that comprise helical trackways, which cause the cover to assume a substantially rolled position. However, this type of roll-up covers cannot be converted to a spring or electric motor assisted cover.

There are also roll-up covers with a spring-loaded shaft which facilitate winding of the curtain. The function of this type of roll-up covers is absolutely associated with the spring, such that in case of spring failure the roll-up covers cannot be operated. Also, this type of roll-up covers cannot be converted to a manual or electric motor version of the cover.

Further, there are roll-up covers with helical trackways or spring-loaded shafts comprising an electric motor mounted on an auxiliary shaft inside the housing or in a position outside the housing box. In case of an emergency or electric motor failure, there are mechanisms to allow the user to operate the roll-up cover manually. However, there still remains the need for the electric motor to be replaced as this roll-up cover cannot be operated manually in the long term. Also, this type of covers cannot be converted to a manual or spring assisted version of the cover.

Hence, there remains a need for a cover system that can be easily adapted by a user, without the need of special tools or special knowledge, from a manually operated cover to a motorized or a spring assisted cover and vice versa, and wherein the spring and/or electric motor can be easily replaced in case of malfunction or failure of the same, by means of a kit comprising parts to allow such a conversion.

### Summary of the invention

It is an object of the present invention to provide a conversion kit according to claim 1 for converting a manually operated roll-up cover assembly to a motorized roll-up cover assembly.

Said kit comprising an electric motor assembly adapted to be mounted and/or removed, by a user, coaxially and slidably within a hollow transverse rotatable shaft of an existing cover assembly, to rotate said shaft.

The kit further comprises a smart Artificial Intelligence (AI) controller for controlling an electric motor assembly and other elements, such as light sources arranged in the cover assembly, and parts for remotely controlling the electric motor assembly and said other elements arranged in the cover assembly.

Said smart Al controller combined with a smartphone mobile application provides the user the ability to control the electric motor assembly and the and configure parameters such as light brightness, enable/disable functionalities such as operate an end slat actuator and receive critical maintenance alerts.

The kit further comprising parts for connecting the electric motor assembly, the smart Al controller and the vehicle power system.

A non-claimed embodiment provides a conversion kit for converting a manually operated roll-up cover as sembly to a spring assisted cover assembly.

Said kit comprising a torsion spring-loaded assembly adapted to be mounted and/or removed, by a user, coaxially and slidably within a hollow transverse rotatable shaft of an existing cover assembly, to rotate said shaft.

### Brief description of the drawings

A more complete understanding of our invention and its advantages will be apparent from the detailed description taken in conjunction with the accompanying drawings in which:
FIG. 1 is a is a perspective schematic view of a roll-up cover assembly installed onto a conventional pickup truck bed.
FIG. 2 shows a conversion kit for converting a manually operated roll-up cover assembly to a motorized roll-up cover assembly, according to an embodiment of the present invention.
FIG. 3 is an exploded view of the first end section of an electric motor assembly according to an embodiment of the present invention.
FIG. 4 is a perspective view of a torsion spring-loaded assembly according to the non-claimed embodiment.
FIG. 5 is a perspective exploded view of a torsion spring-loaded assembly according to the non-claimed embodiment.
FIG. 6 shows a smart-Al controller circuit board mounted on a side wall of a housing box.
FIG. 7 shows an exploded view of a smart-Al controller circuit board and a wiring harness mounted on a side wall of a housing box.
FIG. 8 shows an exploded view of a torsion spring-loaded assembly to be mounted on a housing box.
FIG. 9 shows an exploded view of an electric motor assembly to be mounted on a housing box.
FIG. 10 is a cross sectional side view of the existing cover assembly in accordance with the invention, wherein the rollable curtain is in a fully extended position.
FIG. 11 shows a wiring diagram of the electric motor version of a cover assembly, according to an embodiment of the invention.

### Detailed description of the invention

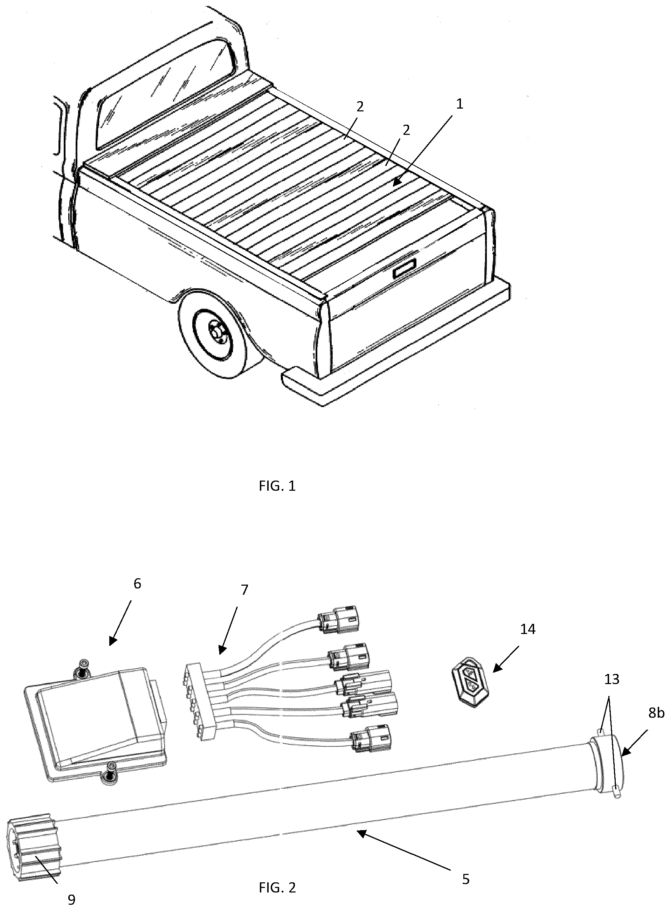

According to a fist aspect of the invention, FIG. 2 shows a conversion kit, according to an embodiment of the present invention, for converting an existing manually operated roll-up cover assembly to a motorized roll-up cover assembly.

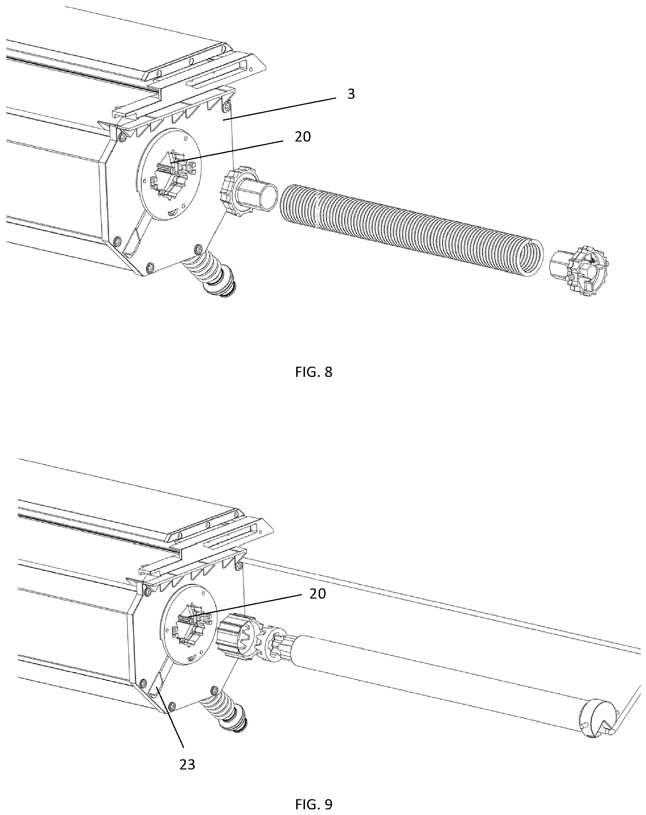

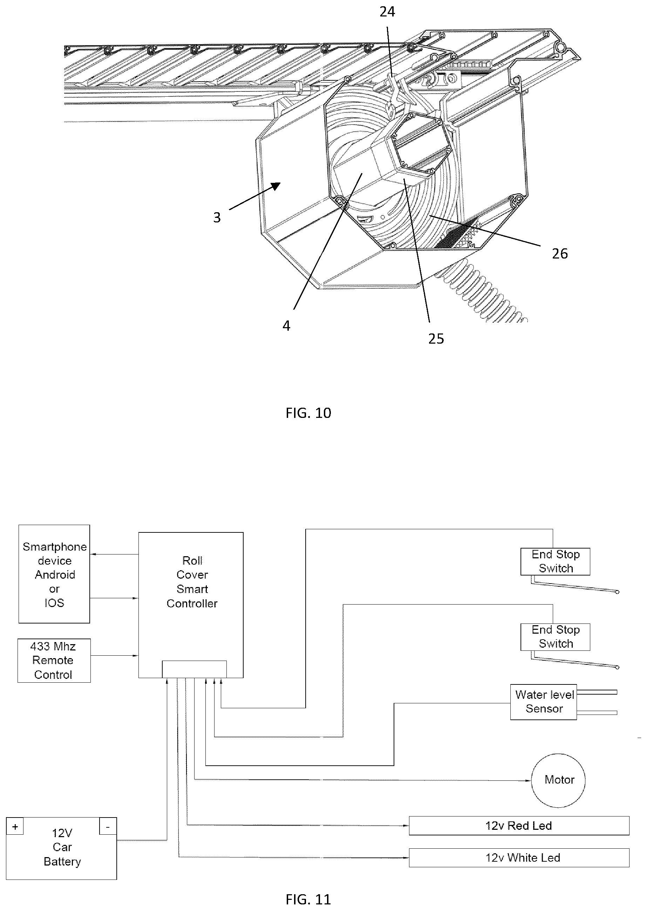

Said roll-up cover assembly comprising a rollable curtain 1 including a plurality of transverse adjacent panels or slats 2 which extend laterally across the pickup truck bed, as shown in FIG. 1, and a housing box 3, as shown in FIGs. 8 and 9, adapted to be mounted at the forward end of the truck bed for receiving and storing the rollable curtain 1, and comprising a hollow transverse rotatable shaft 4, as shown in Fig. 10, mounted therein.

With reference to Fig. 10, the housing box 3 further comprises one or more curtain collapsible engaging means 24, each mounted on one or more radially alligned sleeve elements 25, each mounted on the tranverse rotatable shaft 4.

Said collapsible engaging means 24 keep the curtain's tranverse slats parallel with the rotatable shaft 4 and transform the rotational movement of the shaft 4 into a linear motion of the rollable curtain, in an evenly distributed manner along the whole width of the rollable curtain.

"Linear" is understood to mean that the rollable curtain describes a line that can be straight or curved.

The housing box 3 additionally comprises side walls having helical trackways 26 to guide the rollable curtain 1 free of excessive frictional resistance upon extending or retracting the same.

With reference to FIG. 2, the conversion kit comprises an electric motor assembly 5 adapted to be mounted and/or removed, by a user, coaxially and slidably within the hollow transverse rotatable shaft 4 of an existing cover assembly, through an existing opening 20 arranged on a side wall of said housing box 3, to rotate said shaft 4.

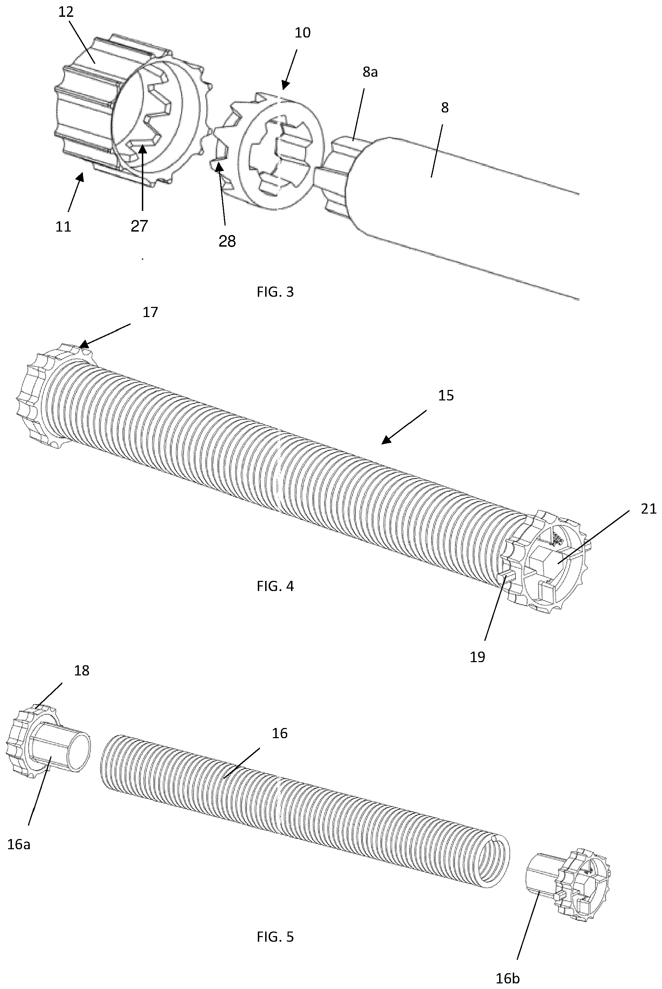

The electric motor assembly 5, as shown in FIGs. 2 and 3, comprises a substantially cylindrical outer housing 8, an electric motor, not shown, arranged within said outer housing 8 and transmission means 9.

Said transmission means 9 comprising gear means 10 mounted to a first end section 8a of said outer housing 8 for engaging the drive means 11, that are either comprised within the transmission means 9 or coupled to the interior of the shaft 4.

According to the invention, as shown in FIG: 3, the transmission means 9 further comprise drive means 11 mounted on said gear means 10 for driving the transverse rotatable shaft 4.

In a preferred embodiment of the present invention, the drive means 11 are removably mounted on said gear means 10. The drive means 11 comprise an internal shape 27 that matches the external shape 28 of the gear means 10, said shapes 27, 28 are tapered shapes, or U-shapes to facilitate removal of the electric motor assembly 5 from the rotatable shaft 4 upon failure of the power system.

Said drive means 11 are configured to internally engage the transverse rotatable shaft 4, for transmitting the rotary force from the electric motor means (electric motor assembly) to said shaft 4, by means of engagement notches 12 spaced about the outer circumferential surface thereof designed to be in driving engagement with depending portions arranged on the inner surface of the transverse rotatable shaft 4.

The external profile of the drive means 11 matches that of the existing opening 20, such that a user can easily insert the electric motor assembly 5, through said opening 20.

The electric motor assembly 5 also comprises engaging means 13 on a second end section 8b of said substantially cylindrical outer housing 8, designed for engaging a side wall of said housing box 3.

Additionally, one side wall of the housing box 3 includes a retaining mechanism 22 comprising a retaining member that is selectively movable between a position in which the retaining member blocks said engaging means 13 and a position in which the retaining member does not block said engaging means 13, such that a user can manually engage and disengage the electric motor assembly 5, without the need of tools or special knowledge.

The retaining member is selectively movable by means of a manual actuator 23. In one embodiment of the invention the manual actuator is a lever 23.

The matching profiles of the drive means 11 and the opening 20 along with the engaging means 13 allow a user to easily insert or remove the electric motor assembly 5, through said opening 20, into or out of the hollow transverse rotatable shaft 4 and lock it in place or unlock it, without the need of special tools or special knowledge.

In operation, the cover assembly when comprising the electric motor assembly 5, is electrically operable to be moved between extended, semi-extended and retracted positions. The rollable curtain 1 can be stopped and locked at any spot by means of an auto locking mechanism.

The drive means 11 are connected with the electric motor means through said gear means 10, such that the drive means 11 are rotatable in a first direction of rotation, upon an "unwinding" actuation of the motor and are rotatable in a second direction of rotation, opposite the first direction, upon a "winding" actuation of the electric motor. Thus, when the existing roll-up cover comprises the motor assembly 5 of the invention, the rotational movement of the shaft is transformed into a linear motion of the rollable curtain.

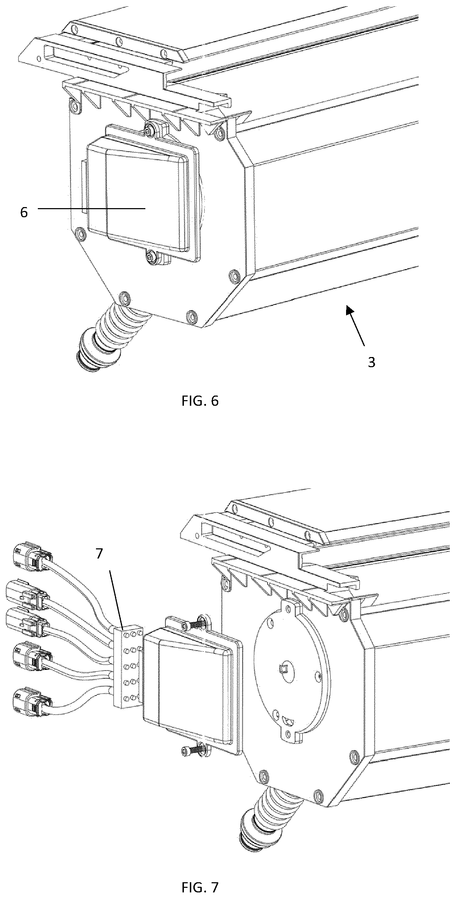

The conversion kit for converting a manually operated roll-up cover assembly for a truck bed to a motorized roll-up cover assembly additionally comprises a smart-Al controller circuit board 6, as shown in FIGs. 6 and 7, adapted to be mounted to the housing box 3 for receiving commanding signals from a remote controller or a smartphone device and driving the electric motor assembly 5 accordingly.

The conversion kit for converting a manually operated roll-up cover assembly for a truck bed to a motorized roll-up cover assembly further comprises a wiring harness 7 comprising a plurality of connectors and wires, to connect the electric motor assembly, the smart Al controller and the vehicle's power system.

Optionally, the conversion kit for converting a manually operated roll-up cover assembly for a truck bed to a motorized roll-up cover assembly may comprise a remote-control element 14 for remotely controlling the movement of the rollable curtain 1 or controlling the function of the other possible electric elements i.e., lights, arranged on said rollable curtain 1. Said remote-control element 14 may comprise a plurality of buttons allowing multiple inputs from the user.

By means of an app installed in a smartphone, as shown in FIG. 11, a user can remotely control the function of the electric motor assembly or other electric elements arranged on the rollable curtain 1 such that the rollable curtain can be opened, closed or stopped at any point, the electric elements arranged on the rollable curtain, i.e., lights, may be activated or disactivated, the brightness of the lights may be adjusted, maintenance alerts may be sent, the end slat actuator may be enabled or disabled, etc.

According to a non-claimed embodiment, FIG, 4 and 5 show a conversion kit for converting a manually operated roll-up cover assembly for a truck bed to spring assisted cover assembly.

Said conversion kit, comprising a torsion spring-loaded assembly 15 configured for being mounted and/or removed, by a user, coaxially and slidably within a hollow transverse rotatable shaft of an existing cover assembly, to rotate said shaft 4, through said opening 20 arranged on a side wall of the housing box 3.

According to this embodiment, the torsion spring-loaded assembly 15 comprises a torsion spring 16 and drive means 17 mounted to a first end section 16a thereof for driving the transverse rotatable shaft 4.

The torsion spring tightens when the rollable curtain 1 is extended and loosens upon retraction of the rollable curtain 1, such that the torsion spring stores energy during extension of the curtain and releases energy during retraction of the curtain in order to assist the user's operation. The drive means 17 comprise engagement notches 18 spaced about the outer circumferential surface thereof designed to be in driving engagement with depending portions arranged on the inner surface of the transverse rotatable shaft 4.

The external profile of the drive means 17 matches that of the existing opening 20, such that a user can easily insert the torsion spring-loaded assembly 15, through said opening 20.

Engaging means 19 for engaging a side wall of said housing box 3 are comprised at a second end portion 16b of the torsion spring 16.

The retaining mechanism 22 of the housing box 3 allows locking and unlocking of the torsion spring-loaded assembly 15 by locking or unlocking said engaging means 19.

The matching profiles of the drive means 17 and the opening 20 along with the engaging means 19 and the retaining mechanism 22 allow a user to easily insert or remove the torsion spring-loaded assembly 15, through said opening 20, into or out of the hollow transverse rotatable shaft 4 and lock it in place or unlock it, without the need of special tools or special knowledge.

In a preferred embodiment, the torsion spring-loaded assembly 15 further comprises a mechanism 21 to allow the user to adjust the torsion spring tension.

In a preferred embodiment, said mechanism is a polygonaly shaped element 21.

Constructional elements of the electric motor assembly 5 and the spring-loaded assembly 15 in combination with the configuration or design of the shaft 4 and the housing box 3 result in a sealed system once the electric motor assembly 5 or spring-loaded assembly 15 is inserted in the opening 20.

While the embodiments have been described in detail in the description, the same is to be considered illustrative and not restrictive in character, being understood that it would be obvious to those skilled in the art that various other changes and modifications may be made without departing from the scope of the disclosure.

## Claims

1. A conversion kit for converting a manually operated roll-up cover assembly for a truck bed to a motorized roll-up cover assembly, the manually operated roll-up cover assembly including a rollable curtain (1) formed of a plurality of adjacent transverse panels (2) and a housing box (3) adapted to be mounted at the forward end of the truck bed for receiving and storing said rollable curtain, said housing box (3) comprising a hollow transverse rotatable shaft (4) mounted therein, the kit comprising:
an electric motor assembly (5) adapted to be mounted and/or removed, by a user, coaxially and slidably within the hollow transverse rotatable shaft (4), through an opening (20) arranged on a side wall of the housing box (3), to rotate said shaft (4);
a smart-Al controller circuit board (6) adapted to be mounted on the housing box (3) for receiving commanding signals from a remote controller or a smartphone device and driving the electric motor assembly (5) accordingly; and
a wiring harness (7) comprising a plurality of connectors and wires, to connect the electric motor assembly to the smart Al controller circuit board (6) and to a power system of the vehicle
said electric motor assembly (5) comprising a substantially cylindrical outer housing (8), an electric motor arranged within said outer housing (8) and transmission means (9) comprising gear means (10) mounted to a first end section (8a) of said outer housing (8);
**characterized in that** the transmission means (9) further comprises drive means (11) mounted on said gear means (10) for driving the transverse rotatable shaft (4);
and **in that** the drive means (11) comprise engagement notches (12) spaced about the outer circumferential surface thereof designed to be in driving engagement with depending portions arranged on the inner surface of the transverse rotatable shaft (4).

2. A kit according to claim 1, wherein the drive means (11) are removably mounted on said gear means (10).

3. A kit according to claims 1 or 2, wherein the drive means (11) comprise an internal shape (27) that matches an external shape (28) of the gear means (10), said shapes (27, 28) comprising tapered shapes, or U-shapes.

4. A kit according to any of the preceding claims, wherein the electric motor assembly (5) comprises a DC electric motor for converting the electrical energy of the vehicle into mechanical energy.

5. A kit according to any of the preceding claims, wherein a second end section (8b) of said outer housing (8) comprises engaging means (13) for engaging a side wall of said housing box (3).

6. A kit according to any of the preceding claims, wherein the kit further comprises a remote-control element (14) for remotely controlling the movement of the rollable curtain (1) or any other electrical elements arranged on the rollable curtain (1).

7. A kit according to claim 6, wherein the remote-control element (14) includes a plurality of buttons allowing multiple inputs from the user.

## Patentansprüche

1. Umrüstsatz zum Umrüsten einer manuell betätigten rollbaren Abdeckungsanordnung für eine Ladefläche eines Lastwagens in eine motorisierte rollbare Abdeckungsanordnung, wobei die manuell betätigte rollbare Abdeckungsanordnung einen Rollvorhang (1) umfasst, der aus einer Vielzahl von benachbarten Querplatten (2) besteht, und ein Gehäuse (3), das am vorderen Ende der Ladefläche des Lastwagens montiert werden kann, um den Rollvorhang aufzunehmen und zu lagern, wobei das Gehäuse (3) eine darin gelagerte hohle, quer verlaufende, drehbare Welle (4) aufweist, und wobei der Satz Folgendes umfasst:
eine Elektromotorbaugruppe (5), die vom Benutzer durch eine an einer Seitenwand des Gehäuses (3) angeordnete Öffnung (20) koaxial und verschiebbar in der hohlen, quer verlaufenden, drehbaren Welle (4) angebracht und/oder entfernt werden kann, um die Welle (4) zu drehen;
eine intelligente-Kl-Steuerplatine (6), die am Gehäuse (3) angebracht werden kann, um Befehlssignale von einer Fernsteuerung oder einem Smartphone zu empfangen und die Elektromotorbaugruppe (5) entsprechend anzutreiben; und
einen Kabelbaum (7), der eine Mehrzahl an Steckverbindern und Kabeln umfasst, zum Anschluss der Elektromotorbaugruppe an die intelligente Kl-Steuerplatine (6) und an ein Stromversorgungssystem des Fahrzeugs;
wobei die Elektromotorbaugruppe (5) ein im Wesentlichen zylindrisches Außengehäuse (8), einen innerhalb des Außengehäuses (8) angeordneten Elektromotor und ein Übertragungsmittel (9) umfasst, das wiederum ein Getriebemittel (10) umfasst, wobei das Getriebemittel an einem ersten Endabschnitt (8a) des Außengehäuses (8) angebracht ist;
**dadurch gekennzeichnet, dass**
das Übertragungsmittel (9) ferner Antriebsmittel (11) umfasst, die auf dem Getriebemittel (10) montiert sind, um die querliegende drehbare Welle (4) anzutreiben;
und dass die Antriebsmittel (11) Eingriffskerben (12) umfassen, die um ihre äußere Umfangsfläche herum voneinander beabstandet sind und dazu bestimmt sind, in Antriebseingriff mit entsprechenden Abschnitten zu stehen, die an der Innenfläche der quer verlaufenden drehbaren Welle (4) angeordnet sind.

2. Bausatz nach Anspruch 1, wobei die Antriebsmittel (11) abnehmbar am Getriebemittel (10) angebracht sind.

3. Bausatz nach Anspruch 1 oder 2, wobei die Antriebsmittel (11) eine Innenform (27) aufweisen, die einer Außenform (28) des Getriebemittels (10) entspricht, wobei die Formen (27, 28) konisch oder U-förmig sein können.

4. Bausatz nach einem der vorhergehenden Ansprüche, wobei die Elektromotorbaugruppe (5) einen Gleichstrommotor zur Umwandlung der elektrischen Energie des Fahrzeugs in mechanische Energie umfasst.

5. Bausatz nach einem der vorhergehenden Ansprüche, wobei ein zweiter Endabschnitt (8b) des Außengehäuses (8) Eingriffsmittel (13) zum Eingriff in eine Seitenwand des Gehäuses (3) aufweist.

6. Bausatz nach einem der vorhergehenden Ansprüche, wobei der Bausatz ferner ein Fernbedienungselement (14) zur Fernsteuerung der Bewegung des Rollvorhangs (1) oder anderer am Rollvorhang (1) angeordneter elektrischer Elemente umfasst.

7. Bausatz nach Anspruch 6, wobei das Fernbedienungselement (14) eine Mehrzahl von Tasten aufweist, die dem Benutzer mehrere Eingaben ermöglichen.

## Revendications

1. Kit de conversion permettant de convertir un ensemble couverture à enrouler à fonctionnement manuel pour un plateau de camion en un ensemble couverture à enrouler motorisé, l'ensemble couverture à enrouler à fonctionnement manuel comportant un rideau enroulable (1) formé d'une pluralité de panneaux transversaux (2) adjacents et d'une boîte de logement (3) adapté pour être monté au niveau de l'extrémité avant du plateau de camion pour recevoir et stocker ledit rideau enroulable, ladite boîte de logement (3) comprenant un arbre (4) rotatif transversal creux monté à l'intérieur, le kit comprenant :
un ensemble moteur électrique (5) adapté pour être monté et/ou retiré, par un utilisateur, de manière coaxiale et coulissante au sein de l'arbre (4) rotatif transversal creux, à travers une ouverture (20) agencée sur une paroi latérale de la boîte de logement (3), pour faire tourner ledit arbre (4) ;
une carte de circuit de contrôleur intelligent-IA (6) adaptée pour être montée sur la boîte de logement (3) pour recevoir des signaux de commande d'une contrôleur distant ou d'un dispositif de téléphone intelligent et entraîner l'ensemble moteur électrique (5) en conséquence ; et
un faisceau de câbles (7) comprenant une pluralité de connecteurs et fils, pour connecter l'ensemble moteur électrique à la carte de circuit de contrôleur intelligent-IA (6) et à un système de puissance du véhicule ;
ledit ensemble moteur électrique (5) comprenant un logement externe (8) sensiblement cylindrique, un moteur électrique agencé au sein dudit logement externe (8) et un moyen de transmission (9) comprenant un moyen d'engrenage (10) monté sur une première section d'extrémité (8a) dudit logement externe (8) ;
**caractérisé en ce que**
le moyen de transmission (9) comprend en outre un moyen d'entraînement (11) monté sur ledit moyen d'engrenage (10) pour entraîner l'arbre (4) rotatif transversal ;
et **en ce que** les moyens d'entraînement (11) comprennent des encoches de mise en prise (12) espacées autour de leur surface circonférentielle externe destinées à être en prise d'entraînement avec des parties dépendantes agencées sur la surface interne de l'arbre rotatif transversal (4).

2. Kit selon la revendication 1, dans lequel les moyens d'entraînement (11) sont montés de manière amovible sur ledit moyen d'engrenage (10).

3. Kit selon les revendications 1 ou 2, dans lequel les moyens d'entraînement (11) comprennent une forme intérieure (27) qui correspond à une forme extérieure (28) du moyen d'engrenage (10), lesdites formes (27, 28) comprenant des formes effilées, ou des formes en U.

4. Kit selon l'une quelconque des revendications précédentes, dans lequel l'ensemble moteur électrique (5) comprend un moteur électrique CC pour convertir l'énergie électrique du véhicule en énergie mécanique.

5. Kit selon l'une quelconque des revendications précédentes, dans lequel une seconde section d'extrémité (8b) dudit logement externe (8) comprend un moyen de mise en prise (13) pour venir en prise avec une paroi latérale de ladite boîte de logement (3).

6. Kit selon l'une quelconque des revendications précédentes, dans lequel le kit comprend en outre un élément de contrôle à distance (14) pour contrôler à distance le mouvement du rideau enroulable (1) ou de quelconques autres éléments électriques agencés sur le rideau enroulable (1).

7. Kit selon la revendication 6, dans lequel l'élément de contrôle à distance (14) comporte une pluralité de boutons permettant de multiples saisies par l'utilisateur.
